# EUROPÄISCHE PATENTSCHRIFT

(11) **EP 4 666 855 B1**
(45) Veröffentlichungstag und Bekanntmachung des Hinweises auf die Patenterteilung: **22.04.2026**
(21) Anmeldenummer: 24183720.2
(22) Anmeldetag: 21.06.2024
(51) Int. Cl.: A01M 25/00, A01B 49/04, A01C 5/06

(54) **KÖDERLEGEMASCHINE**
BAIT SPREADING MACHINE
MACHINE DE POSE D'APPÂTS

(43) Veröffentlichungstag der Anmeldung: 24.12.2025
(73) Patentinhaber: Metitron GmbH, 72539 Pfronstetten (DE)
(72) Erfinder: SPÄTH, Harald, 72539 Pfronstetten (DE)
(74) Vertreter: Christ, Niko

(56) Entgegenhaltungen:
- EP-A1- 0 018 314
- CN-U- 202 819 421
- DE-A1- 102016 003 870
- ES-U- 1 027 053
- FR-A1- 2 644 675
- GB-A- 764 574

## Beschreibung

Die vorliegende Erfindung betrifft eine Köderlegemaschine zur verdeckten Ablage von Ködern, vorzugsweise Fraßködern, insbesondere Giftködern, in einem im Erdreich künstlich erzeugten Gang gemäß dem Oberbegriff des Anspruchs 1. Weitere Köderlegemaschinen werden im Stand der Technik gezeigt, wie z.B. in den Dokumenten EP 0 018 314 A1, CN 202 819 421 U, GB 764 574 A, FR 2 644 675 A1, ES 1 027 053 U, DE 10 2016 003870 A1.

Vorzugsweise handelt es sich bei der Köderlegemaschine um eine Arbeitsmaschine für den mobilen Einsatz ohne eigene Antriebsquelle. Demgemäß kann es sich um eine mobile Anbaumaschine zur Kopplung mit einem Träger- und Antriebsfahrzeug, beispielsweise einem Schlepper bzw. Traktor handeln. Diese Träger- und Antriebsfahrzeuge haben Kopplungsvorrichtungen, um die angebauten Maschinen von einer Transportstellung in eine Arbeitsstellung zu bewegen, und umgekehrt. Die Köderlegemaschine kann auch mit Köderlegegerät bezeichnet werden.

Nagetiere, insbesondere Wühlmäuse, beispielsweise Feldmäuse, Rötelmäuse, Bisamratten, Schermäuse und Lemminge, können schwere Schäden an Wurzelgemüsen, Stauden, Kartoffeln, Obstbäumen und anderen Nutzpflanzen verursachen. Die Bekämpfung von der Nagetiere kann mittels Begasungsmitteln, Giftködern oder Mausefallen erfolgen. Als Giftköder werden bevorzugt Fraßköder verwendet. Die Köder müssen tief und unzugänglich für Vögel in die Nagetiergänge oder in die mit einer Legeflinte oder mit einer Köderlegemaschine geschaffenen Nagetiergänge eingebracht werden. Die Nagetiergänge müssen nach dem Einbringen der Köder nach oben verschossen werden bzw. sein. Zum Schutz von Säugern und Vögeln dürfen keine Köder an der Oberfläche zurückbleiben.

Die eingangs erwähnte Ködermaschine ist aus der Praxis bekannt geworden. Diese weist einige Nachteile auf. Vor allem ist diese bekannte Köderlegemaschine nicht für steinigen Boden geeignet. Außerdem kann es mit dieser Köderlegemaschine zu Problemen bei der Ausbringung und Ablage der Köder kommen.

Ausgehend von diesem Stand der Technik liegt der vorliegenden Erfindung die Aufgabe zugrunde, eine Köderlegemaschine bereit zu stellen, die für eine Köderablage in einem Boden bzw. in ein Erdreich besser geeignet ist, auf und/oder in dem sich Hindernisse, insbesondere harte Gegenstände wie zum Beispiel Steine befinden und die vorteilhafte Möglichkeiten für eine verbesserte Ausbringung der Köder bzw. für eine verbesserte Ablage der Köder in dem mittels des Gangformers erzeugten Gang ermöglicht, und die vorteilhafte Möglichkeiten für ein sichereres Verschließen des mittels des Gangformers erzeugten Ganges nach der Ablage der Köder in diesem ermöglicht.

Gelöst wird diese Aufgabe durch eine Köderlegemaschine mit den Merkmalen des unabhängigen Anspruchs 1. Sinnvolle Ausgestaltungen können den sich anschließenden abhängigen Ansprüchen und dem nachfolgenden Beschreibungstext entnommen werden.

Insoweit betrifft die Erfindung eine Köderlegemaschine zur verdeckten Ablage von Ködern, vorzugsweise Fraßködern, insbesondere Giftködern, in einem im Erdreich künstlich erzeugten Gang, umfassend einen Schleppanhänger, der einen Pflugkörper mit einer, auch als Pflug bezeichenbaren, Schar, vorzugsweise und einem Vorschneider bzw. einer Sech oder einer vorlaufenden Scheibensech bzw. einer vorlaufenden Sechscheibe, zum Aufschneiden des Erdreichs vor der eine Schar-Schneide aufweisenden Schar umfasst, vorzugsweise und der einen Andruckkörper, vorzugsweise eine um eine in einer Gebrauchsstellung horizontale Drehachse drehbare Andruckrolle bzw. Verschlussrolle oder Andruckwalze bzw. Verschlusswalze, zum Verschließen einer mittels des Vorschneiders bzw. mittels der Sech und der Schar zuvor in dem Erdreich erzeugten, auch mit Schlitz bezeichenbaren, Furche, umfasst, die ein unteres Schar-Ende aufweist, vorzugsweise das ein in der Schlepprichtung weisendes vorderes Schar-Ende aufweist, an dem ein, vorzugsweise zumindest teilweise hohler, Gangformer, vorzugsweise starr, befestigt ist, der sich in einer Längsrichtung und/oder in einer Schlepprichtung des Schleppanhängers erstreckt und, vorzugsweise der ein zu dem Vorschneider bzw. zu der Sech hin, in der Schlepprichtung bzw. Längsrichtung weisendes, vorderes, vorzugsweise geschlossenes, insbesondere massives, Gangformer-Ende zum Formen eines bzw. des Gangs in dem Erdreich sowie einen, vorzugsweise als Gangformer-Hohlraum ausgebildeten, Köderlegekanal zum Ausbringen der in dem Gang abzulegenden Köder umfasst, vorzugsweise wobei der Gangformer-Hohlraum des Gangformers in eine sich in der Schlepprichtung bzw. Längsrichtung erstreckende untere Gangformer-Öffnung zur Ausbringung der Köder in den Gang mündet, wobei erfindungsgemäß vorgesehen ist, dass der Gangformer in der Schlepprichtung mit dem unteren Schar-Ende eine nach unten hin monoton fliehende Profilkontur ausbildet oder dass das untere Schar-Ende an seinem vorderen Schar-Ende und der Gangformer an seinem vorderen Gangformer-Ende eine sich nach unten und nach hinten hin monoton erstreckende Profilkontur ausbilden, vorzugsweise sodass der Gangformer nicht in der Schlepprichtung bzw. nach vorn, vorzugsweise zu dem Vorschneider hin, über das untere Schar-Ende der Schar heraus ragt.

Durch diese erfindungsgemäßen Merkmale lässt sich die Gefahr eines Hängenbleibens an auf und/oder im Erdreich vorhandenen Hindernissen, insbesondere harten Gegenständen wie zum Beispiel Steinen, minimieren.

Gemäß einem besonders bevorzugten Ausführungsbeispiel kann vorgesehen sein, dass sich das vordere Gangformer-Ende des Gangformers unmittelbar, vorzugsweise stufenfrei, an eine in der Schlepprichtung bzw. an die in der ersten Richtung, vorzugsweise zu dem Vorschneider hin, nach vorn weisende Schar-Schneide der Schar anschließt und/oder dass eine oder die Schar bzw. die Schar-Schneide der Schar, in einer zweiten Richtung von oben nach unten zu dem Gangformer hin betrachtet, in einer dritten Richtung, vorzugsweise von dem Vorschneider weg, nach hinten geneigt bzw. abgeschrägt oder mit einer ersten Schräge gestaltet ist und/oder dass das vordere Gangformer-Ende des Gangformers ausgehend von dem unteren Schar-Ende der Schar, in einer vierten Richtung, vorzugsweise von dem Vorschneider weg, nach hinten geneigt bzw. abgeschrägt bzw. mit einer zweiten Schräge gestaltet ist. Dadurch kann die Gefahr eines Hängenbleibens an auf und/oder im Erdreich vorhandenen Hindernissen, insbesondere Steinen, noch weiter reduziert werden. In diesem Zusammenhang kann man von der Ausbildung der Schar mit einem "negativen Unterzug" sprechen.

Vorzugsweise ist die Gangformer-Öffnung, in der Schlepprichtung bzw. Längsrichtung betrachtet, und in einer sechsten Richtung von dem vorderen Gangformer-Ende weg nach hinten offen, um die mittels des Gangformers in den Gang ausgebrachten bzw. in dem Gang abgelegten Köder bei einer Bewegung des Gangformers in der Schlepprichtung bzw. Längsrichtung nicht zu behindern.

Gemäß einer bevorzugten Weiterbildung kann vorgesehen sein, dass der Gangformer mit einem sich in der Längsrichtung erstreckenden, im Wesentlichen zylindrischen Gangformer-Rohr gestaltet ist, das im Wesentlichen zylindrische Gangformer-Rohrwände aufweist, die einen oder den Gangformer-Hohlraum begrenzen und die einen maximalen Gangformer-Rohrwand-Innenabstand oder einen maximalen Gangformer-Innendurchmesser zueinander aufspannen, und dass eine oder die sich in der Schlepprichtung bzw. Längsrichtung erstreckende Gangformer-Öffnung des Gangformer-Rohrs, senkrecht zu der Schlepprichtung bzw. Längsrichtung betrachtet, eine Gangformer-Öffnungs-Breite aufweist, die im Wesentlichen dem maximalen Gangformer-Rohrwand-Innenabstand oder dem maximalen Gangformer-Innendurchmesser des Gangformer-Rohrs entspricht oder die nur geringfügig kleiner ist als der maximale Gangformer-Rohrwand-Innenabstand oder der maximale Gangformer-Innendurchmesser des Gangformer-Rohrs. Dadurch kann eine Minimierung der Gefahr eines Zusetzens der Gangformer-Öffnung durch Köder, so dass eine verbesserte bzw. über eine lange Zeit sichere Ausbringung der Köder in den Gang erreicht werden kann.

Gemäß einer Ausführungsvariante kann vorgesehen sein, dass eine oder die sich in der Schlepprichtung bzw. Längsrichtung erstreckende Gangformer-Öffnung des Gangformer-Rohrs zum Ausbringen der Köder in den Gang durch Abtrennen oder Abschneiden eines unteren Gangformer-Rohrteils des Gangformer-Rohrs hergestellt wird bzw. ist. Dadurch kann die Gangformer-Öffnung besonders kostengünstig hergestellt werden.

Gemäß einer bevorzugten Ausgestaltung kann vorgesehen sein, dass die Schar mittels eines Mechanismus an einem auch als Grindel bezeichenbaren Schar-Träger relativ zu diesem, vorzugsweise um eine oder mehrere horizontale Schwenk- bzw. Drehachsen, verschwenkbar gelagert ist, vorzugsweise der einerseits mit dem Schar-Träger gekoppelt ist und andererseits mit der Schar gekoppelt ist. Dadurch lassen sich günstige Möglichkeiten zum Einstellen der Lage der Schar und des daran befestigten Gangformers relativ zu dem Schar-Träger erreichen und zum Ausweichen bzw. Passieren von Hindernissen, beispielweise Steinen, erreichen, die auf oder in dem Erdreich liegen.

Gemäß einem ganz besonders bevorzugten Ausführungsbeispiel kann vorgesehen sein, dass der Mechanismus ein viergliedriges und viergelenkiges Koppelgetriebe mit parallelen Drehachsen seiner Gelenke umfasst oder als ein viergliedriges und viergelenkiges Koppelgetriebe mit parallelen Drehachsen seiner Gelenke ausgebildet ist. Bei dem Koppelgetriebe handelt es sich also um ein ebenes Viergelenkgetriebe. Bei dem Koppelgetriebe kann es sich bevorzugt um ein Führungsgetriebe handeln, das eine erste Koppel, eine zweite Koppel, einen als eine erste Schwinge fungierenden ersten Führungsarm und einen als eine zweite Schwinge fungierenden zweiten Führungsarm umfasst, die einen Doppel-Arm ausbilden. Das Führungsgetriebe kann als eine Parallelogramm-Führung ausgebildet sein. Durch die vorstehenden Maßnahmen lassen sich weiter verbesserte Möglichkeiten zum Einstellen der Lage der Schar und des daran befestigten Gangformers relativ zu dem Schar-Träger erreichen und zum Ausweichen bzw. Passieren von Hindernissen, beispielweise Steinen, die auf oder in dem Erdreich liegen. Insbesondere kann durch die vorstehenden Maßnahmen erreicht werden, dass der Gangformer in einem vertikalen Bereich, innerhalb dessen er von einer Stellung knapp oberhalb der Oberfläche des Bodens bzw. Erdreichs bis in eine bestimmte gewünschte Arbeitstiefe in dem Boden bzw. Erdreich verschwenkbar ist, eine im Wesentlichen gleich bleibende horizontale Lage etwa parallel zu der Oberfläche des Bodens bzw. Erdreichs einnehmen kann. Dadurch ist eine vorteilhafte Ausbildung eines horizontalen Gangs im Boden bzw. Erdreich zur Ablage der Köder bei minimierten Kräften, insbesondere Zugkräften, zu Ausbildung des Gangs ermöglicht.

Gemäß einer bevorzugten Ausgestaltung kann vorgesehen sein, dass der Mechanismus eine, vorzugsweise hydraulische, erste Feder umfasst, die einerseits direkt oder indirekt an dem Schar-Träger und andererseits direkt oder indirekt an der Schar angelenkt ist und mittels der eine Federkraft ausübbar ist, um eine Schwenkbewegung der Schar relativ zu dem Schar-Träger dämpfen zu können. Dadurch kann Hindernissen, beispielsweise Steinen, besonders wirksam begegnet werden. Es lässt sich eine sogenannte Steinsicherung erreichen. Hierzu kann vorgesehen sein, dass die Federkraft der ersten Feder einstellbar ist und/oder dass die erste Feder in ihrer Federwirkung blockierbar ist. Im nicht blockierten, also aktivierten bzw. freigegebenen Zustand, der ersten Feder kann eine sogenannte Schwimmstellung erreicht werden, in welcher mittels der ersten Feder eine vorteilhafte Dämpfung der Schwenkbewegung ermöglicht ist. Wenn die Federkraft der ersten Feder einstellbar ist, kann ein unterschiedlicher Dämpfungsgrad eingestellt werden.

Gemäß einer bevorzugten Variante kann vorgesehen sein, dass die erste Feder einerseits gelenkig an dem Schar-Träger und andererseits gelenkig an dem ersten Führungsarm oder an dem zweiten Führungsarm angelenkt ist.

Gemäß einer Ausführungsvariante kann vorgesehen sein, dass der Schleppanhänger einen Andruckkörper zum Verschließen einer mittels der Schar zuvor in dem Erdreich erzeugten Furche umfasst.

Gemäß einer Weiterbildung kann vorgesehen sein, dass der Andruckkörper um eine in einer Gebrauchsstellung horizontale Drehachse drehbar ist. Der um die Drehachse drehbare Andruckkörper kann über seinen Außenumfang mit Eingriffskörpers, beispielsweise Zähnen, ausgestattet sein, die bei einem Aufliegen des Andruckkörpers auf dem Erdreich bzw. Boden ein sichereres Drehen des Andruckkörpers um die Drehachse bewirken können. Der um die Drehachse drehbare Andruckkörper kann mit einer Dosiervorrichtung zum Dosieren der Köder gekoppelt sein, die mittels des Andruckkörpers antreibbar ist bzw. angetrieben wird. Der Dosierung kann ein Vorratsbehälter zur Aufnahme der mittels der Dosiervorrichtung dosierbaren Köder zugeordnet sein. Bei der Dosiervorrichtung kann es sich um eine um eine Drehachse drehbare Dosierscheibe handeln, die eine oder mehrere Durchgangsöffnungen bzw. Bohrungen zur dosierten Ausbringung der Köder aus dem Vorratsbehälter in den Gangformer-Hohlraum des Gangformers aufweisen kann.

Bevorzugt kann der Andruckkörper an der Schar befestigt sein, so dass er von der Schar getragen ist. Alternativ kann der Andruckkörper direkt oder indirekt an dem Schar-Träger befestigt sein, so dass er von dem Schar-Träger getragen ist.

Gemäß einer bevorzugten Ausgestaltung kann vorgesehen sein, dass an der Schar oder an dem Schar-Träger eine mit dem Andruckkörper gekoppelte Andruckkörper-Höheneinstellvorrichtung zur Einstellung eines unterschiedlich großen vertikalen Abstands zwischen dem Andruckkörper und der Schar oder zwischen dem Andruckkörper und dem Schar-Träger und damit zur Einstellung einer unterschiedlich großen Andruckkraft des Andruckkörpers auf das Erdreich befestigt ist. Dadurch kann in besonderem Maße gewährleistet werden, dass die mittels des Vorschneiders und der Schar zuvor in dem Erdreich erzeugte Furche mittels des Andruckkörpers sicher verschließbar ist.

Dabei kann vorgesehen sein, dass die Andruckkörper-Höheneinstellvorrichtung mit einer zweiten Feder mit einer einstellbaren Federkraft gekoppelt ist, zur Einstellung einer unterschiedlich großen Andruckkraft des Andruckkörpers auf das das Erdreich. Dadurch kann abhängig von dem jeweiligen Erdreich bzw. der jeweiligen Bodenbeschaffenheit eine darauf angepasste Andruckkraft einstellen.

Gemäß einer bevorzugten Ausführungsvariante kann vorgesehen sein, dass an dem Schar-Träger ein Ausleger befestigt ist, an dem ein Höhenführungskörper zur Höhenführung des Gangformers angebracht ist, der, in einer fünften Richtung von der Schar weg nach hinten betrachtet, hinter dem Andruckkörper und/oder hinter dem Gangformer angeordnet ist und der derart gestaltet ist, dass er auf dem Erdreich abgestützt werden kann.

Der Höhenführungskörper kann um eine in einer Gebrauchsstellung horizontale Drehachse drehbar sein. Bei dem Höhenführungsrolle kann es sich um eine Höhenführungsrolle oder um eine Höhenführungswalze handeln.

Gemäß einer besonders bevorzugten Ausgestaltung kann vorgesehen sein, dass an dem Ausleger eine mit dem Höhenführungskörper gekoppelte Höhenführungskörper-Höheneinstellvorrichtung zur Einstellung einer unterschiedlich großen vertikalen Arbeitstiefe des Gangformers in dem Erdreich befestigt ist.

Gemäß einer Weiterbildung kann vorgesehen sein, dass der Höhenführungskörper an dem Ausleger um eine Höhenführungskörper-Drehachse verschwenkbar angelenkt ist. Dadurch ist mittels der Höhenführungskörper-Höheneinstellvorrichtung eine unterschiedliche vertikale Arbeitstiefe des Gangformers derart einstellbar ist, dass der Gangformer relativ zu dem Ausleger um die Drehachse verschwenkbar ist.

Weitere Vorteile, Merkmale und Gesichtspunkte lassen sich dem nachfolgenden Beschreibungsteil entnehmen, in dem die Erfindung anhand eines Ausführungsbeispiels näher erläutert wird.

Es zeigen
- Figur 1: eine Köderlegemaschine in einer perspektivischen Darstellung;
- Figur 2: die Köderlegemaschine gemäß Figur 1 in einer Seitenansicht;
- Figur 3: einen vergrößerten Ausschnitt der Figur 2;

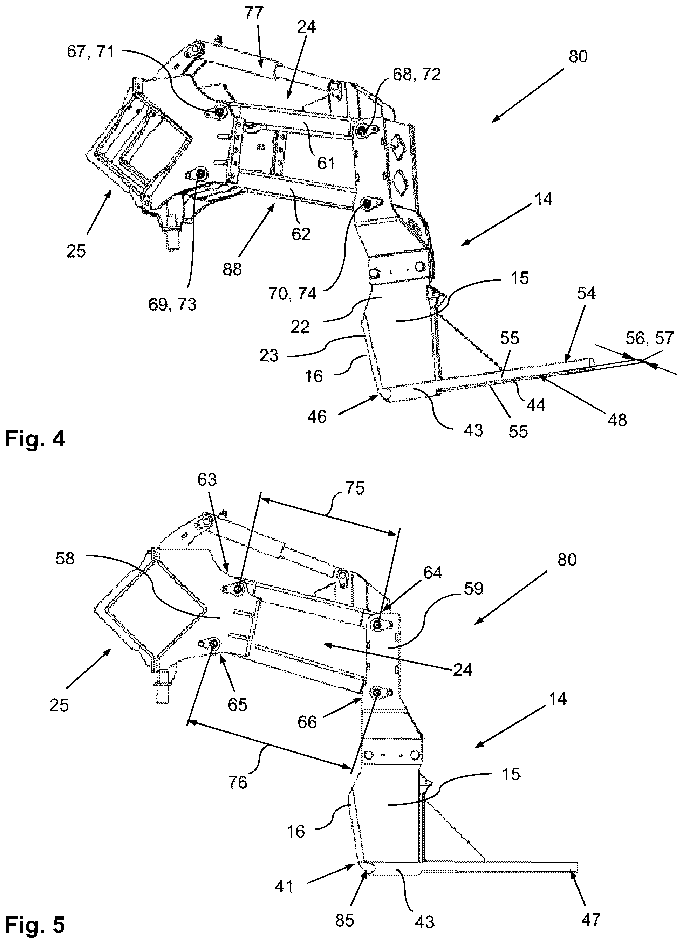

- Figur 4: die mit dem Mechanismus gekoppelte Schar der Köderlegemaschine in einer perspektivischen Darstellung;
- Figur 5: die mit dem Mechanismus gekoppelte Schar in einer Seitenansicht;
- Figur 6: einen Schlepper bzw.- Traktor zum Ankoppeln an die die Köderlegemaschine und die Köderlegemaschine in einer Arbeitsstellung, in welcher der Vorschneider und die Schar sich jeweils teilweise im Boden bzw. Erdreich befinden und in welcher sich der Gangformer in einer bestimmten Arbeitstiefe im Boden bzw. Erdreich befindet.

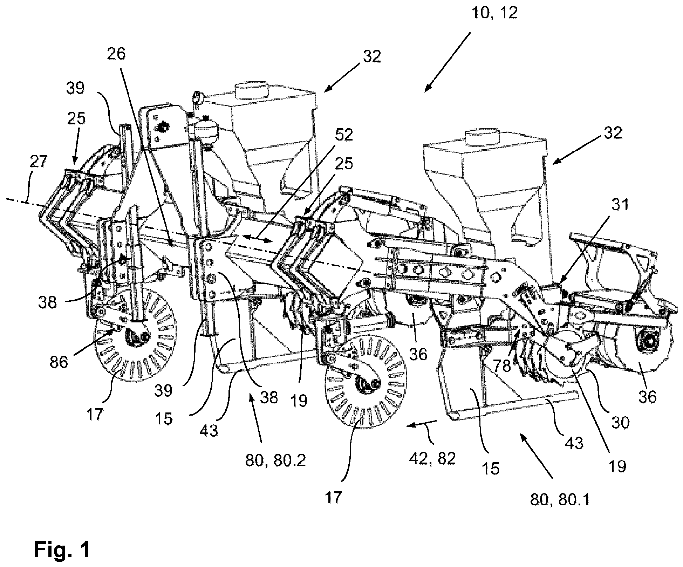

Die in Figur 1 gezeigte mobile Köderlegemaschine 10 umfasst den mobilen Schleppanhänger 12 und dient zur verdeckten Ablage von Ködern, vorzugsweise Fraßködern, insbesondere Giftködern, in einem mit Hilfe der Köderlegemaschine 10 im Boden bzw. Erdreich 11 künstlich erzeugten Gang 13. Die Köderlegemaschine 10 bzw. der Schleppanhänger 12 umfasst einen Pflugkörper 14 mit einer eine Schar-Schneide 16 aufweisenden Schar (Pflug) 15. Die Köderlegemaschine 10 bzw. der Schleppanhänger 12 umfasst auch einen als Aufschneider bezeichenbaren Vorschneider 17, der auch mit Sech bezeichnet werden kann, zum Aufschneiden des Erdreichs 11 vor der Schar 15. Bei dem Vorschneider 17 handelt es sich um einen Scheibenkörper in Form eines Scheibensechs bzw. um eine Sechscheibe, also um eine Art Scheibenmesser. Der Scheibenkörper 17 ist um eine in Gebrauchsstellung 84 der Köderlegemaschine 10 bzw. des Schleppanhängers 12 horizontale Vorschneider-Drehachse 18 drehbar. Die Köderlegemaschine 10 bzw. der Schleppanhänger 12 umfasst außerdem einen Andruckkörper 19 zum Verschließen einer mittels des Vorschneiders 17 und der Schar 15 zuvor in dem Boden bzw. Erdreich 11 erzeugten Furche bzw. Schlitz. Bei dem Andruckkörper 19 handelt es sich um eine Andruckwalze. Der Andrucckörper 19 ist um eine in der Gebrauchsstellung 84 horizontale Andruckkörper-Drehachse 20 drehbar. Der Andruckkörper 19 ist an einer Andruckkörper-Halterung 21 angelenkt, die im Bereich eines oberen Endes 22 der Schar 15 lösbar befestigt ist und die von der Schar 15 getragen ist. Die Schar 15 ist über einen Mechanismus 24 und eine Halterung 25 an einem Schar-Träger 26 lösbar befestigt. Der Schar-Träger 26 erstreckt sich entlang seinen Träger-Längsachse 27 in einer Träger-Längsrichtung 52 parallel zu der Andruckkörper-Drehachse 20. Der Schar-Träger 26 kann, wie gezeigt, einen quadratischen Querschnitt 28 aufweisen. Bei dem Schar-Träger 26 handelt es sich um ein langestrecktes Träger-Profil.

Der um die Andruckkörper-Drehachse 20 drehbare Andruckkörper 19 weist über seinen Außenumfang 29 Eingriffskörper 30, beispielsweise Zähne, auf, die bei einem Aufliegen des Andruckkörpers 19 auf dem Erdreich bzw. auf dem Boden 11 ein sichereres Drehen des Andruckkörpers 19 um die Andruckkörper-Drehachse 20 bewirken können. Der um die Andruckkörper-Drehachse 20 drehbare Andruckkörper 19 ist mit einer Dosiervorrichtung 31 zum Dosieren der Köder gekoppelt, die mittels des Andruckkörpers 19 antreibbar ist. Der Dosiervorrichtung 31 ist ein Vorratsbehälter 32 zur Aufnahme der mittels der Dosiervorrichtung 31 dosierbaren Köder zugeordnet. Bei der Dosiervorrichtung 31 kann es sich um eine um eine Drehachse drehbare Dosierscheibe handeln. Die Dosierscheibe kann eine Durchgangsöffnung bzw. Bohrung oder mehrere Durchgangsöffnungen bzw. Bohrungen zur dosierten Ausbringung der Köder aus dem Vorratsbehälter 32 in einen Gangformer-Hohlraum 44 eines Gangformers 43 aufweisen, auf den nachstehend noch näher eingegangen wird.

An dem Schar-Träger 26 ist über die Halterung 25 ein Ausleger 33 befestigt. Der Ausleger 33 weist ein vorderes Ausleger-Ende 34 auf, das an der Halterung 25 befestigt ist und weist ein sich von dem vorderen Ausleger-Ende 34 weg erstreckendes hinteres Ausleger-Ende 35 auf. Im Bereich des von dem Vorschneider 17 bzw. von dem Andruckkörper 19 weg nach hinten weisenden hinteren Ausleger-Ende 35 ist ein Höhenführungskörper 36 angelenkt. Bei diesem handelt es sich um eine Höhenführungswalze. Der Höhenführungskörper 36 ist um eine in der Gebrauchsstellung 84 horizontale Höhenführungskörper-Drehachse 37 drehbar. Die Höhenführungs-Drehachse 37 erstreckt sich parallel zu der Andruckkörper-Drehachse 20 und parallel zu der Vorschneider-Drehachse 18.

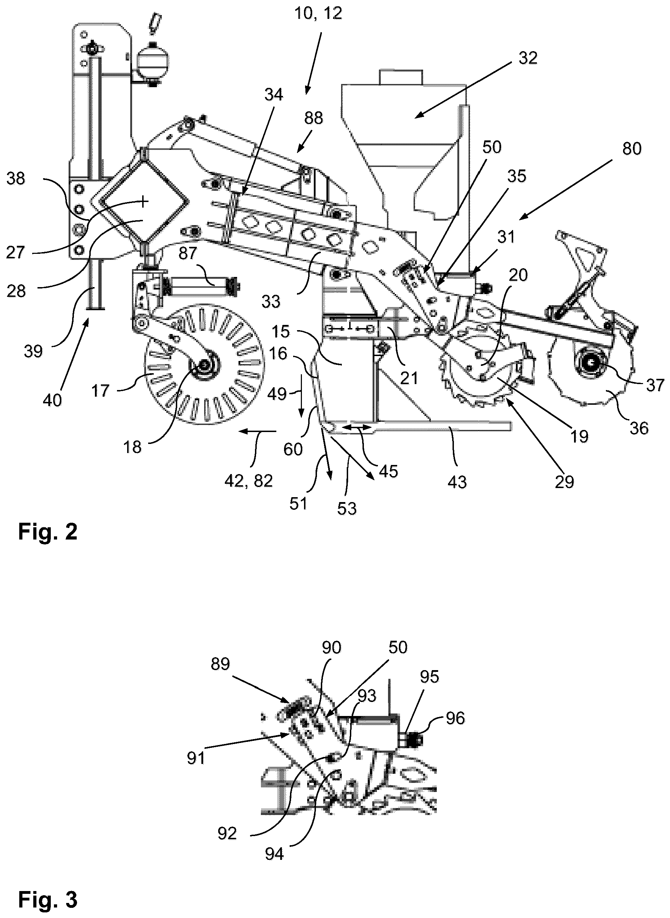

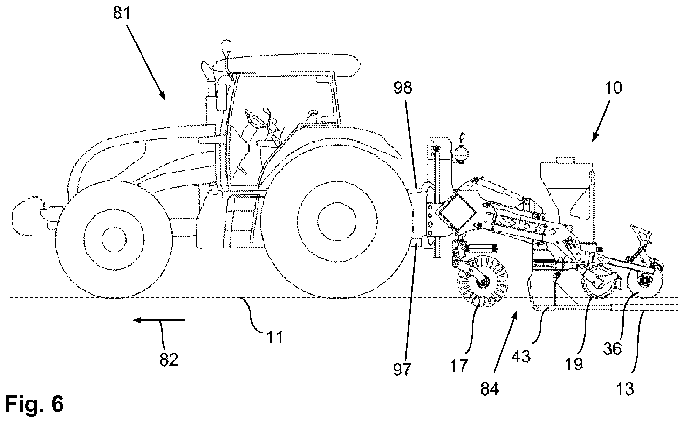

An dem Schar-Träger (Trägerprofil) 26 ist über eine Stützfuß-Halterung 38 ein höhenverstellbarer Stützfuß 39 zum sicheren Abstellen der Köderlegemaschine 10 auf dem Boden 11 befestigt, der von dem Schar-Träger 26 getragen ist. Zum sicheren Abstellen der Köderlegemaschine 10 wird der Stützfuß 39 von der in den Figuren 1, 2 und 6 gezeigten Stützfuß-Transportstellung 40 vertikal nach unten in eine Stützfuß-Stützstellung auf den Boden 11 derart überführt, dass der Vorschneider 17 den Boden 11 nicht berührt.

Die Schar 15 erstreckt sich in der Gebrauchsstellung 84 in einer zweiten Richtung 49 vertikal von oben nach unten. Die Schar 15 weist ein unteres Schar-Ende 22 auf, an dem ein zumindest teilweise hohler Gangformer 43 zum Formen eines Gangs 13 in dem Boden bzw. Erdreich 11 zum Ablegen der Köder befestigt ist. Der Gangformer 43 erstreckt sich in einer Längsrichtung 45 entlang einer Längsachse des Gangformers 43 und erstreckt sich in der Schlepprichtung 42 des Schleppanhängers 12. Der Gangformer 43 weist ein zu dem Vorschneider 17 hin weisendes, vorderes Gangformer-Ende 46 zum Formen des Gangs 13 in dem Erdreich 11 auf. Der Gangformer 43 weist einen Gangformer-Hohlraum 44 für die in dem Gang 13 im Boden bzw. Erdreich 11 abzulegenden Köder auf. Der Gangformer-Hohlraum 44 des Gangformers 43 mündet in eine sich in der Längsrichtung 45 erstreckende untere Gangformer-Öffnung 48 zur Ausbringung der Köder in den Gang 13 im Boden bzw. Erdreich 11. Der Gangformer 43 bildet in der Schlepprichtung 42 mit dem unteren Schar-Ende 23 eine nach unten hin monoton fliehende Profilkontur 41 aus. Konkret bildet das untere Schar-Ende 23 an seinem vorderen Schar-Ende 83 und der Gangformer 43 an seinem vorderen Gangformer-Ende 46 die sich nach unten und nach hinten 51, 53 hin monoton erstreckende Profilkontur 41 aus. Folglich ragt der Gangformer 43 nicht in der Schlepprichtung 42 bzw. in einer ersten Richtung 42 nach vorn, vorzugsweise zu dem Vorschneider 17 hin, über das untere Schar-Ende 23 der Schar 15 heraus. Das vordere Gangformer-Ende 46 des Gangformers 43 schließt sich unmittelbar an die in der ersten Richtung bzw. Schlepprichtung 42, vorzugsweise zu dem Vorschneider 17 hin, nach vorn weisende Schar-Schneide 16 des Schar 15 an. Die Schar 15 bzw. die Schar-Schneide 16 der Schar 15 ist, in einer zweiten Richtung 49 nach unten zu dem Gangformer 43 hin betrachtet, in einer dritten Richtung 51 von dem Vorschneider 17 weg nach hinten geneigt bzw. abgeschrägt bzw. mit einer ersten Schräge 60 gestaltet. Das vordere Gangformer-Ende 46 des Gangformers 43 ist ausgehend von dem vorderen Schar-Ende 83 des unteren Schar-Ende 23 der Schar 15, in einer vierten Richtung 53, vorzugsweise von dem Vorschneider 17 weg, nach hinten geneigt bzw. abgeschrägt bzw. mit einer zweiten Schräge 85 gestaltet.

Der Gangformer 43 ist mit einem sich in der Längsrichtung 45 erstreckenden, im Wesentlichen zylindrischen Gangformer-Rohr 54 gestaltet. Das Gangformer-Rohr 54 weist im Wesentlichen zylindrische Gangformer-Rohrwände 55 auf, die den Gangformer-Hohlraum 44 begrenzen und umgreifen. Die Gangformer-Rohrwände 55 spannen einen maximalen Gangformer-Rohrwand-Innenabstand 56 oder einen maximalen Gangformer-Innendurchmesser 56 zueinander auf. Die sich in der Längsrichtung 45 erstreckende Gangformer-Öffnung 48 des Gangformer-Rohrs 54 weist, senkrecht zu der Längsrichtung 45 betrachtet, eine Gangformer-Öffnungs-Breite 57 auf, die im Wesentlichen dem maximalen Gangformer-Rohrwand-Innenabstand 56 oder dem maximalen Gangformer-Innendurchmesser 56 des Gangformer-Rohrs 54 entspricht oder die nur geringfügig kleiner ist als der maximale Gangformer-Rohrwand-Innenabstand 56 oder der maximale Gangformer-Innendurchmesser 56 des Gangformer-Rohrs 54. Die sich in der Längsrichtung 45 erstreckende Gangformer-Öffnung 48 des Gangformer-Rohrs 54 ist durch Abtrennen oder Abschneiden eines unteren Gangformer-Rohrteils des im Wesentlichen kreiszylindrischen Gangformer-Rohrs 54 hergestellt.

Die Schar 15 ist mittels eines Mechanismus 24 an einem Schar-Träger 26 relativ zu diesem verschwenkbar gelagert. Der Mechanismus 24 ist als ein viergliedriges und viergelenkiges Koppelgetriebe mit parallelen Drehachsen 71, 72, 73, 74 seiner Gelenke 67, 68, 69, 70 ausgebildet. Bei dem Koppelgetriebe handelt es sich um ein Führungsgetriebe, das eine erste Koppel 58, eine zweite Koppel 59, einen als eine erste Schwinge fungierenden ersten Führungsarm 61 und einen als eine zweite Schwinge fungierenden zweiten Führungsarm 62 umfasst, die einen Doppel-Arm ausbilden. Der erste Führungsarm 61 weist ein erstes Führungsarm-Ende 63 und ein sich von diesem weg erstreckendes zweites Führungsarm-Ende 64 auf. Der zweite Führungsarm 62 weist ein erstes Führungsarm-Ende 65 und ein sich von diesem weg erstreckendes zweites Führungsarm-Ende 66 auf. Bei der ersten Koppel 58 handelt es sich um einen Teil der Halterung 25 bzw. des Schar-Trägers 26 und bei der zweiten Koppel 59 handelt es sich um einen Teil der Schar 15. Der erste Führungsarm 61 ist an dem ersten Führungsarm-Ende 63 seiner Führungsarm-Enden 63, 64 über ein erstes Gelenk 67 um eine erste Drehachse 71 der parallelen Drehachsen 71, 72, 73, 74 drehbar an der ersten Koppel 58 angelenkt und ist an dem zweiten Führungsarm-Ende 64 seiner Führungsarm-Enden 63, 64 über ein zweites Gelenk 68 um eine zweite Drehachse 72 der parallelen Drehachsen 71, 72, 73, 74 drehbar an der zweiten Koppel 58 angelenkt . Der zweite Führungsarm 62 ist an dem ersten Führungsarm-Ende 65 seiner Führungsarm-Enden 65, 66 über ein drittes Gelenk 69 um eine dritte Drehachse 73 der parallelen Drehachsen 71, 72, 73, 74 drehbar an der ersten Koppel 58 angelenkt und ist an dem zweiten Führungsarm-Ende 66 seiner Führungsarm-Enden 65, 66 über ein viertes Gelenk 70 um eine vierte Drehachse 74 der parallelen Drehachsen 71, 72, 73, 74 drehbar an der zweiten Koppel 59 angelenkt. Bei dem ersten Führungsarm 61 handelt es sich in der Gebrauchsstellung 84 um einen oberen Führungsarm der Führungsarme 61, 62. Bei dem zweiten Führungsarm 62 handelt es sich in der Gebrauchsstellung 84 um einen unteren Führungsarm der Führungsarme 61, 62. Der erste Führungsarm 61 weist eine erste Führungsarm-Länge 75 auf. Der zweite Führungsarm 62 weist eine zweite Führungsarm-Länge 76 auf. Die zweite Führungsarm-Länge 76 des zweiten Führungsarms 62 ist größer als die erste Führungsarm-Länge 75 des ersten Führungsarms 61. Der Mechanismus 24 umfasst eine erste Feder 77, die einerseits an der Halterung 25 bzw. an dem Schar-Träger 26 und andererseits an der Schar 15 angelenkt ist. Mittels der ersten Feder 77 ist eine Federkraft ausübbar, um eine Schwenkbewegung der Schar 15 relativ zu dem Schar-Träger 26 dämpfen zu können.

Im Bereich des oberen Endes 22 der Schar 15 ist an der Schar 15 eine mit dem Andruckkörper 19 gekoppelte Andruckkörper-Höheneinstellvorrichtung zur Einstellung eines unterschiedlich großen vertikalen Abstands zwischen dem Andruckkörper 19 und der Schar 15 oder zwischen dem Andruckkörper 19 und dem Schar-Träger 26 und damit zur Einstellung einer unterschiedlich großen Andrucckraft des Andruckkörpers 19 auf das das Erdreich bzw. auf den Boden 11 befestigt.

An dem Schar-Träger 26 ist mittels der Halterung 25 ein Ausleger 33 befestigt, an dem der Höhenführungskörper 36 zur Höhenführung des Gangformers 43 angebracht ist. Der Höhenführungskörper 36 ist, in einer fünften Richtung 79 von der Schar 15 weg nach hinten betrachtet, hinter dem Andruckkörper 19 und hinter dem Gangformer 43 angeordnet und ist derart gestaltet, dass er auf dem Boden bzw. Erdreich 11 abgestützt werden kann.

Im gezeigten Ausführungsbeispiel umfasst die Köderlegemaschine 10 bzw. des Schleppanhängers 12 zwei baugleiche Köderlege-Einheiten zur verdeckten Ablage von Ködern, vorzugsweise Fraßködern, insbesondere Giftködern, in jeweils einem im Erdreich bzw. im Boden künstlich erzeugten Gang. Die Köderlegemaschine umfasst zwei im Wesentlichen baugleiche Köderlege-Einheiten 80; 80.1, 80.2, also unter anderem zwei im Wesentlichen baugleiche Vorschneider 17, zwei im Wesentlichen baugleiche Pflugkörper 14 und zwei im Wesentlichen baugleiche Andruckkörper 19 sowie zwei im Wesentlichen baugleiche Höhenführungskörper 36. Folglich sind mit dieser Köderlegemaschine 10 zeitgleich zwei Gänge 13 zum Ablegen von Ködern im Boden bzw. im Erdreich 11 herstellbar, die mit dem jeweiligen Andruckkörper 19 wieder verschließbar sind. Es versteht sich, dass die Köderlegemaschine auch mit mehr als zwei, also mit beispielsweise drei oder vier, im Wesentlichen baugleichen Köderlege-Einheiten ausgestattet sein kann.

An dem Schar-Träger bzw. Träger-Profil 26 der Köderlegemaschine 10 sind, in der Träger-Längsrichtung 27 betrachtet, zwei baugleiche Halterungen 25 in einem einstellbaren Halterungs-Querabstand zueinander lösbar befestigt. An jeder Halterung 25 ist der jeweilige Pflugkörper 14, das jeweilige Schar 15 mit dem jeweiligen Gangformer 43, der jeweilige Andruckkörper 19 und der jeweilige Höhenführungskörper 36 befestigt, die jeweils von dem Schar-Träger 26 getragen sind. Die beiden Vorschneider 17 weisen, in der Träger-Längsrichtung 27 betrachtet, einen einstellbaren Vorschneider-Querabstand zueinander auf. Die beiden Schar 15 weisen, in der Träger-Längsrichtung 27 betrachtet, einen einstellbaren Schar-Querabstand zueinander auf. Die beiden Andruckkörper 19 weisen, in der Träger-Längsrichtung 27 betrachtet, einen einstellbaren Andruckkörper-Querabstand zueinander auf. Die beiden Höhenführungsköper 36 weisen, in der Träger-Längsrichtung 27 betrachtet, einen einstellbaren Höhenführungsköper-Querabstand zueinander auf.

### Arbeitsweise der Köderlegemaschine

Wenn die Köderlegemaschine 10 bzw. der Schleppanhänger 12 mit Hilfe einer mobilen Arbeitsmaschine 81, beispielsweise mit Hilfe des Schleppers bzw. Traktors, in der Schlepprichtung 42 bzw. in einer Fahrtrichtung 82 nach vorn bewegt, insbesondere gezogen und von einer Transportstellung, in welcher alle ihre Bauteile von dem Boden bzw. von dem Erdreich 11 abgehoben sind, in die auch als Gebrauchsstellung bezeichnete Arbeitsstellung 84 abgesenkt, in welcher ein Teil des Vorschneiders 17 und des Gangformers 43 in den Boden bzw. in das Erdreich 11 überführt worden ist, schneidet die Köderlegemaschine 10 zunächst mit dem Vorschneider 17 in Form der Scheibensech den Boden bzw. das Erdreich 11 schlitzförmig auf. Der sich dabei ausbildende Schlitz kann auch mit Furche bezeichnet werden. Es folgt die Schar 15 nach, an deren unterem Schar-Ende 23 der Gangformer 43 angebracht ist, der das nach unten geöffnete Gangformer-Rohr 54 umfasst. Mittels des Gangformers 43 kann im Boden bzw. im Erdreich 11 ein künstlicher Gang 13 zur Ablage von Ködern, vorzugsweise Fraßködern, insbesondere Giftködern, angelegt werden. Der Gangformer 43 dient auch zur Ablage der Köder in dem Gang 13. Hinter der Schar 15 folgt der schwere Andruckkörper 19, im Ausführungsbeispiel die um die Andruckkörper-Drehachse 20 drehbare Andruckwalze, die einerseits den mittels der Scheibensech 17 und der Schar 15 geformten Schlitz sicher verschließt und andererseits für den Antrieb der Dosiervorrichtung 31 für eine Dosierung der Köder sorgt.

### Einstellen des Vorschneiders (Aufschneiders)

Die Sechscheibe 17 sollte einen Schlitz von ca. 4 bis 8 cm Tiefe in den Boden bzw. in das Erdreich 11 schneiden. Die Tiefeneinstellung wird mittels eines Lochrasters 86 vorgenommen. Die Löcher des Lochrasters 86 weisen ein Rastermaß von ca. 23 mm zueinander auf. Hierzu muss ein Bolzen oder eine Schraube in das richtige Raster positioniert werden. Die Einstellung der Schneidekraft sollte so gewählt werden, dass die Sechscheibe 17 beim Überfahren von harten Gegenständen wie z.B. Steinen bzw. Felsen, nach oben ausweichen kann, ohne dass die Maschine 10 sich anhebt, und dass im Gegenzug aber so viel Schneidkraft vorhanden ist, dass der Schlitz in der gewünschten Tiefe im Erdreich bzw. Boden 11 hergestellt werden kann. Um die Schneidekraft zu erhöhen kann die Feder 87 mittels einer Mutter stärker gespannt werden. Um die Schneidekraft zu verringern kann die Feder 87 mittels der Mutter weiter entspannt. Für beide Einstellarbeiten kann ein Kombinations-Werkzeugschlüssel verwendet werden.

### Einstellung der Steinsicherung

Bei der optionalen Steinsicherung 88 kann es sich vorzugsweise um eine hydraulische Steinsicherung handeln. Diese kann derart ausgebildet sein, dass sie bei einem bestimmten Auslösedruck vermittels des Mechanismus 24 ein Nachoben-schwenken der Schar 15 zusammen mit dem Gangformer 43 bewirkt, um größere Beschädigungen der Schar 15 und/oder des Gangformes 43 durch harte Gegenstände, beispielsweise Steine bzw. Felsen auf oder im Erdreich bzw. Boden 11 zu vermeiden und/oder um ein Festhaken der Schar 15 und/oder des Gangformers 43 an den harten Gegenständen zu vermieden. Die Steinsicherung 88 kann mittels einer, vorzugsweise manuell steuerbaren, Hydrauliksteuerung derart gesteuert werden, dass zunächst ein bestimmter maximaler Hydraulikdruck ansteht. Anschließend kann die Hydrauliksteuerung auf eine sogenannte Schwimmsteuerung umgestellt werden. Anschließend kann der Hydraulikdruck mittels der Hydrauliksteuerung auf einen gewünschten Wert abgelassen werden, der an einem Monometer ablesbar ist und bei dem die Steinsicherung 88 auslösen soll.

### Einstellen der Arbeitstiefe des Gangformers

Die Arbeitstiefe des Gangformers 43 ist mittels einer Höhenführungskörper-Höheneinstellvorrichtung 50, die mit dem Höhenführungskörper 36 gekoppelt ist, zwischen ≥120 mm bis 220 mm in einem 20 mm Raster 91 wählbar. Die gewünschte Arbeitstiefe ist mit Hilfe einer Skala 89 einstellbar. Zum Einstellen der Arbeitstiefe muss ein Stecker 90 in die dafür vorgesehenen Ausschnitte des Rasters 91 geschoben und mit einem Sicherungsmittel, beispielsweise einem Klappstecker, wieder gesichert werden. Es sind pro Legeinheit 80; 80.1, 80.2 zwei Stecker 90 einzustecken. Die Arbeitstiefe muss auf beiden Seiten, also bei beiden Legeeinheiten 80; 80.1, 80.2, gleich eingestellt werden. Mit Hilfe des Kombinations-Werkzeugschlüssels, welcher auf den dafür vorgesehenen Sechskant gesteckt wird, kann diese Arbeit durchgeführt werden.

### Einstellen der Verschlusswalze

Die auch als Andruckkörper bezeichnete Verschlusswalze 19 muss den mittels der Sechscheibe 17 und der Schar 15 in dem Erdreich 11 erzeugten Schlitz immer sicher verschließen. Die Höheneinstellung der Verschlusswalze 19 wird mittels eines Lochrasters vorgenommen. Die Löcher des Lochrasters sind in einem Rastermaß von ca. 23 mm zueinander angeordnet. Die Verschlusswalze 19 sollte in einer Grundeinstellung immer ca. 4 bis 6 cm tiefer als die Höhenführungswalze 36 eingestellt werden. Hierzu muss eine erste Schraube 92, deren Schraubenbolzen sich durch ein bogenförmiges bzw. gekrümmtes Langloch 93 erstreckt, gelöst werden und eine zweite Schraube 94 muss in das richtige Raster positioniert werden. Anschließend muss die erste Schraube 92 wieder fest angezogen werden. Die Einstellung der Andruckkraft sollte so gewählt werden, dass die Andruckwalze 19 immer diejenige Kraft ausübt, die zum Verschließen, des zuvor erstellten Schlitzes ausreicht. Um die Andruckkraft zu erhöhen, wird die Feder 95 mittels einer Mutter 96 stärker gespannt. Alternativ kann der Abstand zwischen der Andruckwalze 19 und der Höhenführungswalze 36 (nochmals) vergrößert werden. Um die Andruckkraft zu verringern, wird die Feder 95 mittels der Mutter 96 weiter entspannt. Alternativ kann der Abstand zwischen der Andruckwalze 19 und der Höhenführungswalze 36 (nochmals) verringert werden. Für beide Einstellarbeiten kann der Kombinations-Werkzeugschlüssel verwendet werden.

### Anbau an einen Schlepper bzw. Traktor

Der Anbau der Köderlegemaschine 10 kann über eine Dreipunkthydraulik eines Schleppers bzw. Traktors 81, an seinen Unterlenkern 97 und an seinem Oberlenker 98 erfolgen. Die Unterlenker 97 sind mittig zu fixieren, damit die auch als Gerät bezeichenbare Köderlegemaschine 10 bzw. der Schleppanhänger 12 nicht pendeln kann. Die Unterlenker 97 müssen links wie rechts auf die gleiche Höhe eingestellt werden. Das Gerät bzw. die Köderlegemaschine 10 ist an die Unterlenker 97 anzubauen. Die Vorhandenen Kuppelbolzen müssen ordnungsgemäß gesichert werden. Anschließend ist der Oberlenker 98 anzukuppeln. In der Arbeitsstellung 84 der auch als Pflug bezeichenbaren Schar 15 mit dem Gangformer 43 sollten die Unterlenker 97 des Schleppers bzw. Traktors 81 zu diesem hin leicht abfallend oder parallel zum Boden 11 angeordnet sein (quasi vom Anbaupunkt Rahmen Gerät 10 hin zum Schlepper bzw. Traktor 81). In der Arbeitsstellung 84 des Pflugs 15 sollte der Oberlenker 98 des Schleppers bzw. Traktors 81 zu diesem hin leicht abfallen. Die Schar 15 kann auch mit Pflugschar bezeichnet werden.

### Feldeinsatz

Im Feldeinsatz ist zu beachten, dass mit der abgesenkten Maschine 10 nicht rückwärts gefahren werden darf. Die Maschine 10 und die daran verbauten Komponenten sind ausschließlich für eine Vorwärtsfahrt ausgelegt. Mit abgesenkter Maschine 10 sind enge Kurvenfahrten zu vermeiden.

### BEZUGSZEICHENLISTE

- 10: Köderlegemaschine/Maschine/Gerät
- 11: Boden/Erdboden/Erdreich
- 12: Schleppanhänger
- 13: Gang
- 14: Pflugkörper
- 15: Schar (Pflug)
- 16: Schar-Schneide
- 17: Vorschneider/Aufschneider/Scheibensech/Sechscheibe
- 18: Vorschneider-Drehachse
- 19: Andruckkörper/Andruckwalze/Verschlusswalze
- 20: Andruckkörper-Drehachse
- 21: Andruckkörper-Halterung
- 22: (oberes) Ende der Schar/Schar-Ende
- 23: (unteres) Ende der Schar/Schar-Ende
- 24: Mechanismus/Koppelgetriebe/Führungsgetriebe
- 25: Halterung
- 26: Schar-Träger/Träger-Profil
- 27: Träger-Längsachse
- 28: Querschnitt von 26
- 29: Außenumfang von 19
- 30: Eingriffskörper/Zähne
- 31: Dosiervorrichtung
- 32: Vorratsbehälter
- 33: Ausleger
- 34: (vorderes) Ausleger-Ende von 33
- 35: (hinteres) Ausleger-Ende von 33
- 36: Höhenführungskörper/Höhenführungswalze
- 37: Höhenführungskörper-Drehachse
- 38: Stützfuß-Halterung
- 39: Stützfuß
- 40: Stützfuß-Transportstellung
- 41: Profilkontur
- 42: (erste) Richtung/Schlepprichtung/nach vorn
- 43: Gangformer
- 44: Köderlegekanal/Gangformer-Hohlraum
- 45: Längsrichtung (zu 43)
- 46: vorderes Gangformer-Ende
- 47: hinteres Gangformer-Ende
- 48: (untere) Gangformer-Öffnung
- 49: (zweite) Richtung/nach unten
- 50: Höhenführungskörper-Höheneinstellvorrichtung
- 51: (dritte) Richtung/nach hinten
- 52: Träger-Längsrichtung
- 53: (vierte) Richtung/nach hinten
- 54: Gangformer-Rohr
- 55: Gangformer-Rohrwand
- 56: (maximaler) Gangformer-Rohrwand-Innenabstand / (maximaler) Gangformer-Rohrwand-Innendurchmesser
- 57: Gangformer-Öffnungs-Breite
- 58: (erste) Koppel von 24
- 59: (zweite) Koppel von 24
- 60: (erste) Schräge (von 15, 16)
- 61: (erster) (oberer) Führungsarm/Schwinge
- 62: (zweiter) (unterer) Führungsarm/Schwinge
- 63: (erstes) Führungsarm-Ende von 61
- 64: (zweites) Führungsarm-Ende von 61
- 65: (erstes) Führungsarm-Ende von 62
- 66: (zweites) Führungsarm-Ende von 62
- 67: (erstes) Gelenk von 61
- 68: (zweites) Gelenk von 61
- 69: (drittes) Gelenk von 62
- 70: (viertes) Gelenk von 62
- 71: (erste) Drehachse von 67
- 72: (zweite) Drehachse von 68
- 73: (dritte) Drehachse von 69
- 74: (vierte) Drehachse von 70
- 75: (erste) Führungsarmlänge von 61
- 76: (zweite) Führungsarmlänge von 62
- 77: (erste) Feder (bei 24)
- 78: Andruckkörper-Höheneinstellvorrichtung
- 79: (fünfte) Richtung/nach hinten
- 80: Köderlege-Einheit/Legeeinheit
- 80.1: (erste) Köderlege-Einheit
- 80.2: (zweite) Köderlege-Einheit
- 81: (mobile) Arbeitsmaschine/Schlepper/Traktor
- 82: Fahrtrichtung
- 83: (vorderes) Schar-Ende
- 84: Gebrauchsstellung/Arbeitsstellung (von 10)
- 85: (zweite) Schräge (von 43, 46)
- 86: Lochraster (bei 17)
- 87: (dritte) Feder (bei 17)
- 88: Steinsicherung
- 89: Skala
- 90: Stecker
- 91: (Loch-)Raster (zu 50)
- 92: (erste) Schraube
- 93: (bogenförmiges) Langloch
- 94: (zweite Schraube)
- 95: (zweite) Feder (zu 50)
- 96: Mutter
- 97: Unterlenker
- 98: Oberlenker

## Patentansprüche

1. Köderlegemaschine (10) zur verdeckten Ablage von Ködern in einem im Erdreich (11) künstlich erzeugten Gang (13), umfassend einen Schleppanhänger (12), der einen Pflugkörper (14) mit einer Schar (15) umfasst, wobei die Schar (15) ein unteres Schar-Ende (23) aufweist, an dem ein Gangformer (43) befestigt ist, wobei der Gangformer (43) sich in einer Schlepprichtung (42) des Schleppanhängers (12) erstreckt und ein in der Schlepprichtung (42) weisendes, vorderes Gangformer-Ende (46) zum Formen eines Gangs (13) in dem Erdreich (11), sowie einen Köderlegekanal (44) zum Ausbringen der in dem Gang (13) abzulegenden Köder umfasst,
**dadurch gekennzeichnet, dass** der Gangformer (43) in Schlepprichtung (42) mit dem unteren Schar-Ende (23) eine nach unten hin monoton fliehende Profilkontur (41) ausbildet.

2. Köderlegemaschine nach Anspruch 1, **dadurch gekennzeichnet, dass** sich das vordere Gangformer-Ende (46) des Gangformers (43) unmittelbar an eine in der Schlepprichtung (42) nach vorn weisende Schar-Schneide (16) der Schar (15) anschließt.

3. Köderlegemaschine nach Anspruch 1 oder 2, **dadurch gekennzeichnet, dass** eine oder die Schar-Schneide (16) der Schar (15), in einer zweiten Richtung (49) nach unten zu dem Gangformer (43) hin betrachtet, in einer dritten Richtung (51) nach hinten geneigt bzw. abgeschrägt oder mit einer ersten Schräge (60) gestaltet ist.

4. Köderlegemaschine nach einem der vorstehenden Ansprüche, **dadurch gekennzeichnet, dass** das vordere Gangformer-Ende (46) des Gangformers (43) ausgehend von dem unteren Schar-Ende (23) der Schar (15), in einer vierten Richtung (53) nach hinten geneigt bzw. abgeschrägt oder mit einer zweiten Schräge (85) gestaltet ist.

5. Köderlegemaschine nach einem der vorstehenden Ansprüche, **dadurch gekennzeichnet, dass** der Gangformer (43) mit einem sich in der Längsrichtung (45) erstreckenden, im Wesentlichen zylindrischen Gangformer-Rohr (54) gestaltet ist, das im Wesentlichen zylindrische Gangformer-Rohrwände (55) aufweist, die einen Gangformer-Hohlraum (44) begrenzen und die einen maximalen Gangformer-Rohrwand-Innenabstand (56) oder einen maximalen Gangformer-Innendurchmesser (56) zueinander aufspannen, und dass eine sich in der Schlepprichtung (42) erstreckende Gangformer-Öffnung (48) des Gangformer-Rohrs (54), senkrecht zu der Schlepprichtung (42) betrachtet, eine Gangformer-Öffnungs-Breite (57) aufweist, die im Wesentlichen dem maximalen Gangformer-Rohrwand-Innenabstand (56) oder dem maximalen Gangformer-Innendurchmesser (56) des Gangformer-Rohrs (54) entspricht oder die nur geringfügig kleiner ist als der maximale Gangformer-Rohrwand-Innenabstand (56) oder der maximale Gangformer-Innendurchmesser (56) des Gangformer-Rohrs (54).

6. Köderlegemaschine nach einem der vorstehenden Ansprüche, **dadurch gekennzeichnet, dass** die sich in der Schlepprichtung (42) erstreckende Gangformer-Öffnung (48) des Gangformer-Rohrs (54) zum Ausbringen der Köder in den Gang (13) durch Abtrennen oder Abschneiden eines unteren Gangformer-Rohrteils des Gangformer-Rohrs (54) hergestellt ist.

7. Köderlegemaschine nach einem der vorstehenden Ansprüche, **dadurch gekennzeichnet, dass** die Schar (15) mittels eines Mechanismus (24) an einem Schar-Träger (26) relativ zu diesem verschwenkbar gelagert ist.

8. Köderlegemaschine nach Anspruch 7, **dadurch gekennzeichnet, dass** der Mechanismus (25) ein viergliedriges und viergelenkiges Koppelgetriebe mit parallelen Drehachsen (71, 72, 73, 74) seiner Gelenke (67, 68, 69, 70) umfasst oder als ein viergliedriges und viergelenkiges Koppelgetriebe mit parallelen Drehachsen (71, 72, 73, 74) seiner Gelenke (67, 68, 69, 70) ausgebildet ist.

9. Köderlegemaschine nach Anspruch 8, **dadurch gekennzeichnet, dass** es sich bei dem Koppelgetriebe (25) um ein Führungsgetriebe handelt, das eine erste Koppel (58), eine zweite Koppel (59), einen als eine erste Schwinge fungierenden ersten Führungsarm (61) und einen als eine zweite Schwinge fungierenden zweiten Führungsarm (62) umfasst, die einen Doppel-Arm ausbilden.

10. Köderlegemaschine nach einem der Ansprüche 7 bis 9, **dadurch gekennzeichnet, dass** der Mechanismus (25) eine erste Feder 77 umfasst, die einerseits an dem Schar-Träger (26) und andererseits an der Schar (15) angelenkt ist und mittels welcher eine Federkraft ausübbar ist, um eine Schwenkbewegung der Schar (15) relativ zu dem Schar-Träger (26) dämpfen zu können.

11. Köderlegemaschine nach einem der vorstehenden Ansprüche, **dadurch gekennzeichnet, dass** der Schleppanhänger (12) einen Andruckkörper (19) zum Verschließen einer mittels der Schar (15) zuvor in dem Erdreich (11) erzeugten Furche umfasst, wobei an der Schar (15) oder an dem Schar-Träger (26) eine mit dem Andruckkörper (19) gekoppelte Andruckkörper-Höheneinstellvorrichtung (78) zur Einstellung eines unterschiedlich großen vertikalen Abstands zwischen dem Andruckkörper (19) und der Schar (15) oder zwischen dem Andruckkörper (19) und dem Schar-Träger (26) und damit zur Einstellung einer unterschiedlich großen Andruckkraft des Andruckkörpers (19) auf das Erdreich (11) befestigt ist.

12. Köderlegemaschine nach Anspruch 11, **dadurch gekennzeichnet, dass** die Andruckkörper-Höheneinstellvorrichtung (78) mit einer zweiten Feder (95) mit einer einstellbaren Federkraft gekoppelt ist, zur Einstellung einer unterschiedlich großen Andruckkraft des Andruckkörpers (19) auf das das Erdreich (11).

13. Köderlegemaschine nach einem der vorstehenden Ansprüche, **dadurch gekennzeichnet, dass** an dem Schar-Träger (26) ein Ausleger (33) befestigt ist, an dem ein Höhenführungskörper (36) zur Höhenführung des Gangformers (43) angebracht ist, der, in einer fünften Richtung (79) von der Schar (15) weg nach hinten betrachtet, hinter dem Andruckkörper (19) und/oder hinter dem Gangformer (43) angeordnet ist und der derart gestaltet ist, dass er auf dem Erdreich (11) abgestützt werden kann.

14. Köderlegemaschine nach Anspruch 13, **dadurch gekennzeichnet, dass** an dem Ausleger (33) eine mit dem Höhenführungskörper (36) gekoppelte Höhenführungskörper-Höheneinstellvorrichtung (50) zur Einstellung einer unterschiedlich großen vertikalen Arbeitstiefe des Gangformers (43) in dem Erdreich (11) befestigt ist.

15. Köderlegemaschine nach einem der Ansprüche 13 oder 14, **dadurch gekennzeichnet, dass** der Höhenführungskörper (36) an dem Ausleger (33) um eine Höhenführungskörper-Drehachse (37) verschwenkbar angelenkt ist.

## Claims

1. A bait laying machine (10) for the concealed depositing of bait in an artificially created tunnel (13) in the ground (11), comprising a towed trailer (12) which comprises a plough body (14) with a share (15), wherein the share (15) has a lower share end (23) to which a tunnel former (43) is attached, wherein the tunnel former (43) extends in a towing direction (42) of the towed trailer (12) and comprises a front tunnel former end (46) pointing in the towing direction (42) for forming a tunnel (13) in the ground (11), as well as a bait depositing channel (44) for dispensing the bait to be deposited in the tunnel (13), **characterised in that** the tunnel former (43), in the towing direction (42), forms a profile contour (41) with the lower share end (23) that flows monotonically downwards.

2. The bait laying machine according to claim 1, **characterised in that** the front tunnel former end (46) of the tunnel former (43) adjoins directly a share cutting edge (16) of the share (15) that points forward in the towing direction (42).

3. The bait laying machine according to claim 1 or 2, **characterised in that** one or the share cutting edge (16) of the share (15), viewed in a second direction (49) downwards towards the tunnel former (43), is designed to be inclined or bevelled rearwards in a third direction (51) or with a first slope (60).

4. The bait laying machine according to any one of the preceding claims, **characterised in that** the front tunnel former end (46) of the tunnel former (43), starting from the lower share end (23) of the share (15), is designed to be inclined or bevelled rearwards in a fourth direction (53) or with a second slope (85).

5. The bait laying machine according to any one of the preceding claims, **characterised in that** the tunnel former (43) is designed with a substantially cylindrical tunnel former tube (54) extending in the longitudinal direction (45), which has substantially cylindrical tunnel former tube walls (55) that delimit a tunnel former hollow space (44) and which define between them a maximum tunnel former tube wall inner spacing (56) or a maximum tunnel former inner diameter (56), and that a tunnel former opening (48) of the tunnel former tube (54) extending in the towing direction (42), viewed perpendicularly to the towing direction (42), has a tunnel former opening width (57) which substantially corresponds to the maximum tunnel former tube wall inner spacing (56) or the maximum tunnel former inner diameter (56) of the tunnel former tube (54) or which is only slightly smaller than the maximum tunnel former tube wall inner spacing (56) or the maximum tunnel former inner diameter (56) of the tunnel former tube (54).

6. The bait laying machine according to any one of the preceding claims, **characterised in that** the tunnel former opening (48) of the tunnel former tube (54) extending in the towing direction (42) for dispensing the bait into the tunnel (13) is produced by separating or cutting off a lower tunnel former tube part of the tunnel former tube (54).

7. The bait laying machine according to any one of the preceding claims, **characterised in that** the share (15) is pivotably mounted on a share carrier (26) relative thereto by means of a mechanism (24).

8. The bait laying machine according to claim 7, **characterised in that** the mechanism (25) comprises or is designed as a four-bar and four-joint linkage with parallel pivot axes (71, 72, 73, 74) of its joints (67, 68, 69, 70).

9. The bait laying machine according to claim 8, **characterised in that** the linkage (25) is a guidance linkage which comprises a first coupler (58), a second coupler (59), a first guide arm (61) functioning as a first swing arm, and a second guide arm (62) functioning as a second swing arm, which form a double arm.

10. The bait laying machine according to any one of claims 7 to 9, **characterised in that** the mechanism (25) comprises a first spring (77) which is articulated on the one hand to the share carrier (26) and on the other hand to the share (15) and by means of which a spring force can be exerted in order to damp a pivoting movement of the share (15) relative to the share carrier (26).

11. The bait laying machine according to any one of the preceding claims, **characterised in that** the towed trailer (12) comprises a pressure body (19) for closing a furrow previously created in the ground (11) by means of the share (15), wherein a pressure body height adjustment device (78) coupled to the pressure body (19) is attached to the share (15) or to the share carrier (26) for setting a variably large vertical distance between the pressure body (19) and the share (15) or between the pressure body (19) and the share carrier (26) and thus for setting a variably large pressure force of the pressure body (19) on the ground (11).

12. The bait laying machine according to claim 11, **characterised in that** the pressure body height adjustment device (78) is coupled with a second spring (95) with an adjustable spring force, for setting a variably large pressure force of the pressure body (19) on the ground (11).

13. The bait laying machine according to any one of the preceding claims, **characterised in that** an outrigger (33) is attached to the share carrier (26), on which a height guidance body (36) for the height guidance of the tunnel former (43) is mounted, which, viewed rearwards away from the share (15) in a fifth direction (79), is arranged behind the pressure body (19) and/or behind the tunnel former (43) and is designed such that it can be supported on the ground (11).

14. The bait laying machine according to claim 13, **characterised in that** a height guidance body height adjustment device (50) coupled to the height guidance body (36) is attached to the outrigger (33) for setting a variably large vertical working depth of the tunnel former (43) in the ground (11).

15. The bait laying machine according to claim 13 or 14, **characterised in that** the height guidance body (36) is pivotably articulated to the outrigger (33) about a height guidance body pivot axis (37).

## Revendications

1. Machine de pose d'appâts (10) pour le dépôt dissimulé d'appâts dans une galerie (13) créée artificiellement dans le sol (11), comprenant une remorque tractée (12) qui comprend un corps de charrue (14) avec un soc (15), dans laquelle le soc (15) présente une extrémité inférieure de soc (23) à laquelle est fixé un formeur de galerie (43), le formeur de galerie (43) s'étendant dans une direction de traction (42) de la remorque tractée (12) et comprenant une extrémité avant de formeur de galerie (46) orientée dans la direction de traction (42) pour former une galerie (13) dans le sol (11), ainsi qu'un canal de dépôt d'appâts (44) pour la distribution des appâts à déposer dans la galerie (13),
**caractérisée en ce que** le formeur de galerie (43) forme, dans la direction de traction (42), avec l'extrémité inférieure du soc (23), un contour de profil (41) descendant de manière monotone.

2. Machine de pose d'appâts selon la revendication 1, **caractérisée en ce que** l'extrémité avant du formeur de galerie (46) du formeur de galerie (43) se raccorde directement à un tranchant de soc (16) du soc (15) orienté vers l'avant dans la direction de traction (42).

3. Machine de pose d'appâts selon la revendication 1 ou 2, **caractérisée en ce qu'**un ou le tranchant de soc (16) du soc (15), considéré(e) dans une deuxième direction (49) vers le bas en direction du formeur de galerie (43), est incliné(e) ou biseauté(e) vers l'arrière dans une troisième direction (51) ou avec une première inclinaison (60).

4. Machine de pose d'appâts selon l'une des revendications précédentes, **caractérisée en ce que** l'extrémité avant du formeur de galerie (46) du formeur de galerie (43), partant de l'extrémité inférieure du soc (23) du soc (15), est inclinée ou biseautée vers l'arrière dans une quatrième direction (53) ou avec une seconde inclinaison (85).

5. Machine de pose d'appâts selon l'une des revendications précédentes, **caractérisée en ce que** le formeur de galerie (43) est conçu avec un tube formeur de galerie (54) sensiblement cylindrique s'étendant dans la direction longitudinale (45), qui présente des parois de tube de formeur de galerie (55) sensiblement cylindriques qui délimitent un espace creux de formeur de galerie (44) et qui définissent entre elles un écartement intérieur maximal des parois du tube du formeur de galerie (56) ou un diamètre intérieur maximal du formeur de galerie (56), et **en ce qu'**une ouverture de formeur de galerie (48) du tube de formeur de galerie (54) s'étendant dans la direction de traction (42), considérée perpendiculairement à la direction de traction (42), présente une largeur d'ouverture de formeur de galerie (57) qui correspond sensiblement à l'écartement intérieur maximal des parois du tube du formeur de galerie (56) ou au diamètre intérieur maximal du formeur de galerie (56) du tube de formeur de galerie (54) ou qui est seulement légèrement plus petite que l'écartement intérieur maximal des parois du tube du formeur de galerie (56) ou que le diamètre intérieur maximal du formeur de galerie (56) du tube de formeur de galerie (54).

6. Machine de pose d'appâts selon l'une des revendications précédentes, **caractérisée en ce que** l'ouverture du formeur de galerie (48) du tube de formeur de galerie (54) s'étendant dans la direction de traction (42) pour la distribution des appâts dans la galerie (13) est réalisée par séparation ou découpe d'une partie inférieure du tube du formeur de galerie (54).

7. Machine de pose d'appâts selon l'une des revendications précédentes, **caractérisée en ce que** le soc (15) est monté de manière pivotante sur un support de soc (26) par rapport à celui-ci au moyen d'un mécanisme (24).

8. Machine de pose d'appâts selon la revendication 7, **caractérisée en ce que** le mécanisme (25) comprend ou est conçu comme un mécanisme à bielles quadrilatère et à quatre articulations avec des axes de rotation parallèles (71, 72, 73, 74) de ses articulations (67, 68, 69, 70).

9. Machine de pose d'appâts selon la revendication 8, **caractérisée en ce que** le mécanisme à bielles (25) est un mécanisme de guidage qui comprend une première bielle (58), une deuxième bielle (59), un premier bras de guidage (61) agissant comme un premier bras oscillant, et un deuxième bras de guidage (62) agissant comme un deuxième bras oscillant, qui forment un bras double.

10. Machine de pose d'appâts selon l'une des revendications 7 à 9, **caractérisée en ce que** le mécanisme (25) comprend un premier ressort (77) qui est articulé d'une part au support de soc (26) et d'autre part au soc (15) et au moyen duquel une force de ressort peut être exercée afin d'amortir un mouvement de pivotement du soc (15) par rapport au support de soc (26).

11. Machine de pose d'appâts selon l'une des revendications précédentes, **caractérisée en ce que** la remorque tractée (12) comprend un corps de pression (19) pour fermer un sillon préalablement créé dans le sol (11) au moyen du soc (15), un dispositif de réglage en hauteur du corps de pression (78) couplé au corps de pression (19) étant fixé au soc (15) ou au support de soc (26) pour régler une distance verticale de grandeur variable entre le corps de pression (19) et le soc (15) ou entre le corps de pression (19) et le support de soc (26) et ainsi pour régler une force de pression de grandeur variable du corps de pression (19) sur le sol (11).

12. Machine de pose d'appâts selon la revendication 11, **caractérisée en ce que** le dispositif de réglage en hauteur du corps de pression (78) est couplé à un second ressort (95) avec une force de ressort réglable, pour régler une force de pression de grandeur variable du corps de pression (19) sur le sol (11).

13. Machine de pose d'appâts selon l'une des revendications précédentes, **caractérisée en ce qu'**un bras en porte-à-faux (33) est fixé au support de soc (26), sur lequel est monté un corps de guidage en hauteur (36) pour le guidage en hauteur du formeur de galerie (43), qui, vu vers l'arrière en s'éloignant du soc (15) dans une cinquième direction (79), est disposé derrière le corps de pression (19) et/ou derrière le formeur de galerie (43) et est conçu de telle sorte qu'il peut être appuyé sur le sol (11).

14. Machine de pose d'appâts selon la revendication 13, **caractérisée en ce qu'** un dispositif de réglage en hauteur du corps de guidage en hauteur (50) couplé au corps de guidage en hauteur (36) est fixé au bras en porte-à-faux (33) pour régler une profondeur de travail verticale de grandeur variable du formeur de galerie (43) dans le sol (11).

15. Machine de pose d'appâts selon la revendication 13 ou 14, **caractérisée en ce que** le corps de guidage en hauteur (36) est articulé de manière pivotante au bras en porte-à-faux (33) autour d'un axe de rotation de corps de guidage en hauteur (37).
